# EUROPEAN PATENT SPECIFICATION

(11) **EP 2 682 246 B1**
(45) Date of publication and mention of the grant of the patent: **25.03.2020**
(21) Application number: 12174742.2
(22) Date of filing: 03.07.2012
(51) Int. Cl.: B29C 35/02, B29C 35/04, B29C 73/34

(54) **System and method for curing a sealant**
System und Verfahren zum Härten eines Abdichtmittels
Système et procédé pour durcir un matériau d'étanchéité

(43) Date of publication of application: 08.01.2014
(73) Proprietor: Airbus Operations GmbH, 21129 Hamburg (DE); Marcotodo GmbH, 22880 Wedel (DE)
(72) Inventor: van Koppen, Bjorn, 21682 Stade (DE); Schuell, Alexander, 21684 Stade (DE); Gessenharter, Alexander, 21635 Jork (DE); Graf von Bethusy-Huc, Marc-Philipp, 30938 Grossburgwedel (DE)
(74) Representative: Isarpatent

(56) References cited:
- FR-A1- 2 950 079
- US-A- 4 652 319
- US-A1- 2010 086 669

## Description

The invention relates to a system for curing a sealant, and especially a sealant provided along a seam or joint in an aerofoil or fuselage structure of an aircraft or spacecraft. The present invention also relates to an associated method of curing a sealant, and particularly a sealant provided along a seam or joint in an aerofoil or fuselage structure.

Aerofoil and fuselage structures for aircraft or spacecraft often include gaps along the seams or joints between rigidly interconnected components. Such seams or joints are typically filled with a polymer sealant material both to seal the seam or joint against unwanted ingress of weather and to provide a smooth transition between the outer surfaces of the adjoining and interconnected components, thereby achieving the desired outer surface contours for the structure. In addition, the sealant material may also be employed as a layer between two components of a structure. For example, the rear tail or fin aerofoil structure of an aircraft typically includes a number of cover panels, cowlings and/or fairings which, on assembly, are interconnected with a central box structure. After the assembly of the tail components, gaps along seams or joints at adjoining edges of panels and/or the central box structure are typically filled with polymer sealant material to provide the desired outer profile or contours in the tail surface. That sealant is then cured or hardened to form a robust and durable filled seam in the final structure.

The curing time for such polymer sealant materials is subject to considerably variation depending upon prevailing ambient conditions. With sealant materials commonly employed in such applications in the aircraft industry, a curing time of about eight hours is typical. Under unfavourable ambient conditions (e.g. in Winter when it is cold and dry), however, the curing reaction can be inhibited and substantially delayed to times of up to 24 hours. A disadvantage of such long curing times, of course, are the corresponding delays caused in production of the specific structures involved.

One manner of addressing the above issue has been through use of different sealant materials with more or a faster-reacting hardener or catalyst to correspondingly influence the curing time. This approach, however, has the disadvantage of a much shorter maximum working-time or handling-time for the sealant material, which becomes impractical in the production of very large structures, as is typical in the aircraft industry. Another way of addressing the above issue has been to employ heat lamps (i.e. infrared) to increase surface temperature of the sealant material while it cures, an example of which is described in US 2010/0086669 A1. This procedure, however, has been found to lead to irregular heat distribution and to uncontrolled temperature peaks in the sealant material, with the risk of over-heating both the sealant material and the structure itself. Another technique described in US 4,652,319 uses a conformal oven having a cup-shaped body with flexible, accordion-like cylindrical walls.

It is therefore an object of the present invention to provide a new and improved system and method for curing a sealant in an aerofoil structure or fuselage structure of an aircraft. In accordance with the present invention, a system for curing a sealant having the features recited in claim 1 and a method of curing a sealant as recited in claim 8 are provided. Preferred features are recited in the dependent claims.

According to one aspect, therefore, the invention provides a system for curing a sealant, especially a sealant in an aerofoil structure or a fuselage structure of an aircraft or spacecraft, the system comprising:
a casing which substantially encloses or forms a space or cavity for accommodating the sealant to be cured; and
a device for conditioning air in the space or cavity that accommodates the sealant;
wherein the casing comprises an airflow inlet at one end of region of the casing and an airflow outlet at another end region of the casing for an airflow through said space or cavity, wherein the casing is elongate and in the form of a channel and is configured to direct the airflow through said space or cavity from the airflow inlet to the airflow outlet; and wherein the conditioning device comprises a heater and/or a humidifier for heating and/or humidifying the airflow in the space or cavity that accommodates the sealant.

The invention therefore provides a system which is configured to provide a controlled environment adjacent to and/or along an extent of the sealant to promote curing or hardening of the sealant material. In particular, the system is configured to conduct or to direct an airflow through the casing from the inlet to the outlet and to condition the air in the space or cavity which flows or passes over the sealant. In this way, the curing procedure can be isolated from and rendered independent of the ambient conditions, so that optimised curing or hardening conditions for the sealant material can be effectively ensured. This not only accelerates the production time, but also eliminates the previous potential for large variations in production time.

In a preferred embodiment, the heater is incorporated in the casing. The heater typically comprises at least one heating element, e.g. an electrical resistance heating element, which is arranged to extend within the space or cavity, preferably substantially uniformly over an extent of the space or cavity. The heater is thus preferably configured to generate a substantially uniformly distributed heat within the space or cavity.

In a preferred embodiment, the casing is adapted to the shape of the structure and/or to the specific part or area of the structure at which the sealant is to be cured. That is, the casing is desirably configured to form or enclose a space or cavity that is adapted to the particular curing application concerned. Such a casing may be straight, but can alternatively have a curved form. Where the sealant is provided along a seam or joint between two interconnected components of an aerofoil structure or a fuselage structure, the elongate casing may therefore extend along the length of the seam or joint to accommodate a length of the sealant to be cured. It will be noted, however, that the casing may also be round, rectangular, or some other shape, depending upon the particular application and structure concerned. Where the sealant is not provided along an elongate seam or joint, for example, but as a flexible layer between two components (e.g. a carbon-fibre reinforced composite (CFRC) component and an aluminium component), a non-elongate shape may be appropriate for the casing.

In a preferred embodiment, the casing of the system includes one or more footing for supporting the casing on the aerofoil structure or fuselage structure such that a sealant provided along a seam or joint (or between two components) is covered by the casing and accommodated in the space or cavity. The footing(s) is/are preferably designed to support the casing without risk of causing damage, e.g. scratching, to the aerofoil or fuselage structure upon which it/they stand. Each footing may thus have a base or contact surface of a relatively soft or resilient material, such as an elastomer or rubber material or a fabric material. Furthermore, the casing is preferably configured to substantially seal against lateral airflow leakage with an outer surface of the aerofoil structure or fuselage structure. In this regard, the casing may comprise a sealing member which is preferably flexible or resilient and configured to contact the outer surface of the aerofoil structure or fuselage structure in use.

In a preferred embodiment, the system comprises a blower for generating the airflow through said space or cavity of the casing. Accordingly, the blower is desirably configured to be connectable for communication with the airflow inlet of the casing. In a particularly preferred embodiment, the blower is part of the conditioning device and is thus configured to generate a conditioned airflow for said space or cavity, especially an airflow having a predetermined temperature and/or a predetermined humidity. The conditioning device may thus be adapted to generate an airflow having a temperature within a predetermined or pre-selected range and/or humidity within a predetermined or pre-selected range. That is, each said range may be pre-selected by an operator. The blower may be in the form of a fan or another airflow generator.

In a preferred embodiment, the system comprises a controller which is configured to control or regulate operation of the conditioning device, and especially the heater in dependence upon the airflow through said space or cavity. In a preferred embodiment, the controller may be configured to control or regulate operation of the conditioning device in dependence upon a temperature, humidity and/or speed of the airflow as measured in said space or cavity. Thus, the system preferably includes at least one sensor in the casing for detecting temperature, humidity and/or speed of the airflow.

According to another aspect, the invention provides a method for curing a sealant, especially in an aerofoil or fuselage structure of an aircraft or spacecraft, the method comprising the steps of:
accommodating a sealant to be cured within a space or cavity that is substantially enclosed or formed by a casing, said casing being elongate and in the form of a channel;
generating an airflow and directing that airflow through said space or cavity, preferably such that the sealant is in contact with the airflow; and
conditioning the airflow directed through the space or cavity that accommodates the sealant;
wherein the step of conditioning the airflow comprises one or more of: heating the airflow to a predetermined temperature, and humidifying the airflow to a predetermined humidity.

In other words, this involves any one or more of heating the airflow to a temperature within a predetermined or pre-selected range and/or humidifying the airflow to a humidity within a predetermined or pre-selected range, wherein each range may be pre-selected by an operator.

By providing the sealant material with a stream or flow of controllably conditioned (e.g. heated and/or humidified) air, the curing or hardening of the sealant material - e.g. in the gap along a joint or seam of the aerofoil structure - will be substantially accelerated and is independent of the ambient or prevailing climatic conditions in the assembly hall. An increased temperature and humidity are desirably generated in the airflow for the curing procedure and are held essentially constant. In this way, the curing time can be both minimised and standardised. In dependence on the particular temperature that is predetermined or pre-selected for the procedure, the curing time can be reduced from the previous standard of eight hours to four hours (e.g. at 35°C) or to even less than two hours (e.g. at 50°C). The previous influence of Summer and Winter weather conditions can be effectively eliminated from the production.

As noted above, the casing is elongate and in the form of a channel. Thus, the casing is configured to direct an air flow through said space or cavity from an airflow inlet at one end region of the casing to an airflow outlet at another end region of the casing. Accordingly, the step of accommodating the sealant in the casing preferably comprises arranging the casing on an aerofoil structure or on a fuselage structure to substantially enclose the sealant.

In a preferred embodiment, the step of conditioning the airflow takes place before the airflow enters the said space or cavity in the casing. Alternatively, or in addition, the step of conditioning the airflow takes place within the space or cavity in the casing. Furthermore, at least one sensor is preferably provided in the casing for detecting temperature, humidity and/or speed of the airflow. Thus, if a temperature or humidity of the airflow in the casing is detected as lying outside a predetermined or pre-selected range, the step of conditioning the airflow can be correspondingly adjusted to increase or decrease the temperature or the humidity of the airflow, as appropriate.

In a particularly preferred embodiment, therefore, the method includes the step of detecting one or more of temperature and humidity of the airflow in the casing and adjusting the conditioning of the airflow in the event that the temperature and/or humidity detected lie outside a predetermined or pre-selected range or value. In particular, the conditioning of the airflow is adjusted via a controller to thereby adjust temperature and/or humidity of the airflow to be within the predetermined or pre-selected range. Thus, the risk of over-heating the sealant material or the structure itself is substantially eliminated as the temperature is monitored and regulated. Furthermore, the heating can be regulated in dependence upon the speed of the airflow. By monitoring the temperature and humidity of the airflow during the curing process, a reliable protocol of the process conditions can be established, which, in turn, ensures the repeatability of the process and is particularly important for quality assurance purposes.

According to a further aspect, the disclosure also provides an aerofoil structure or a fuselage structure having a sealant, e.g. along a joint or seam of that structure, which is cured with the system or method of the invention as described above with respect to any one of the preceding embodiments.

In another aspect, the disclosure also provides an aircraft or spacecraft incorporating an aerofoil structure or a fuselage structure of the disclosure described above.

For a more complete understanding of the invention and the advantages thereof, exemplary embodiments of the invention are explained in more detail in the following description with reference to the accompanying drawing figures, in which like reference characters designate like parts and in which:
- Fig. 1: is a schematic exploded view of a vertical tail or fin aerofoil structure of an aircraft, illustrating various components of the structure;
- Fig. 2: is a perspective view of a curing system according to an embodiment of the invention;
- Fig. 3: is a perspective view of a curing system according to another embodiment of the invention in use on an aerofoil structure of an aircraft;
- Fig. 4: is a flow diagram which schematically represents a method according to an embodiment of the invention; and
- Fig. 5: shows an aircraft according to an embodiment of the disclosure.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a less abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not actually required. It will also be understood that the terms and expressions used in the present specification have the ordinary meaning as it accorded to such terms and expressions with respect to their corresponding respective areas of inquiry and study, except where specific meanings have otherwise been set forth herein.

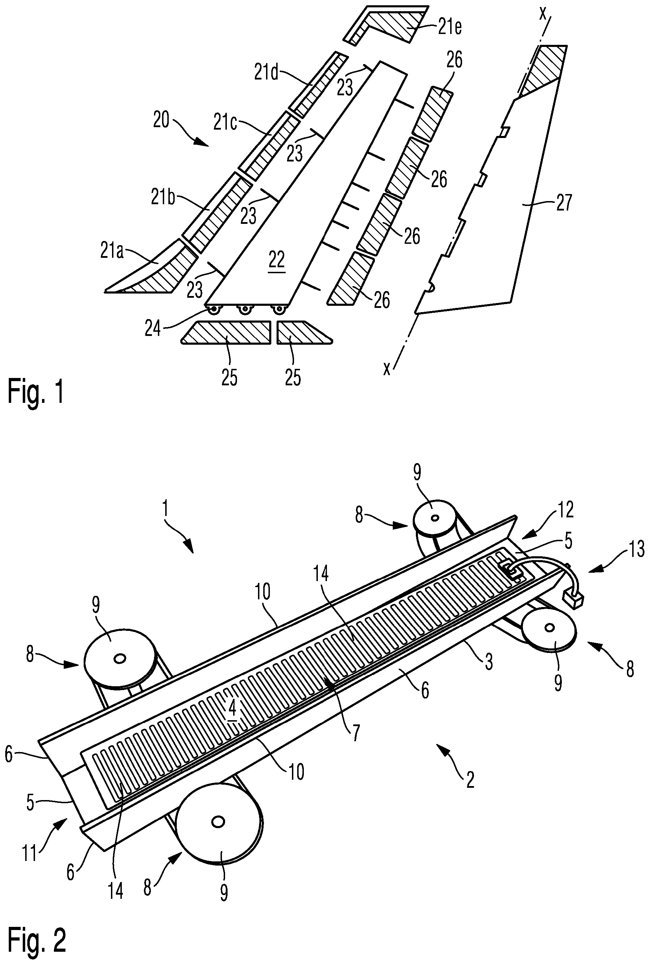

With reference to Fig. 1 of the drawings, various parts of a vertical tail aerofoil structure 20 of an aircraft are shown. The aerofoil structure 20 comprises a series of aerodynamic shaped cover panels 21 arranged one after the other along the leading edge of the tail structure 20, commencing with a base panel 21a, and followed serially by the panels 21b, 21c, 21d and terminating in an upper end cap 21e. These leading edge panels 21 are rigidly interconnected with a central box part or element 22 of the tail structure 20 via rib elements 23 and other fasteners, such as rivets or the like (not shown). The base of the central box part 22 includes three bolting flanges 24 with which the tail structure 20 can be rigidly secured to a fuselage structure of the aircraft (not shown). Fairing panels 25 provide an aerodynamic cladding around this base region of the central box part 22 of the tail structure. At the rear or trailing edge side of the central box part 22, a series of end box elements 26 are provided, and to these a lateral rudder 27 is mounted to the tail airfoil structure 20 for pivoting about an axis X to steer the aircraft about the vertical yaw axis in flight. When the various components of the tail airfoil structure 20 are rigidly interconnected with one another, there are typically gaps and discontinuities in the profile or contour of the outer surface along the length of the joints or seams between the individual components. An aerodynamic sealant material (e.g. polysulphide sealant, such as MC780 B1/2 from the company "Chemetall") is thus applied to or provided in the gaps to seal these joints or seams against unwanted ingress of water or other weather-associated elements into the structure, and also to provide a smoothly continuous contour or profile in the outer surface of the aerofoil structure 20. Although the tail structure 20 shown in Fig. 1 is provided as an example of an aerofoil structure in which the system and method of the present invention may be applied, it will be appreciated by persons skilled in the art that the system and method of this invention are equally applicable to other aerofoil structures, such as wings and/or horizontal stabilizers, as well as to the fuselage structure and engine cowling structures of an aircraft or spacecraft.

Referring now to Fig. 2 of the drawings, an embodiment of a system 1 according to the present invention is specifically shown. In this embodiment, the system 1 comprises a casing 2 having a generally elongate configuration and comprising a U-shaped channel member 3, which defines a corresponding space or cavity 4 therein. The channel member 3 in this embodiment may, for example, be formed from a CFRC material and may have a length in the range of about 1.0 to 1.5 m. In use, the casing 2 is arranged such that the U-shaped cross-section of the channel member 3 is inverted, a top side 5 of the channel member 3 being closed such that the channel member 3 opens between opposite lateral sides 6 of the cross-sectional profile at an underside 7 of the casing 2. The casing 2 also includes footing members 8 for supporting the casing 2 on an aerofoil structure 20 that incorporates the sealant material to be cured.

As will be appreciated by a person skilled in the art, the channel member 3 of the casing 2 is provided in substantially straight or linear sections for use with sealant material in joints or seams of the aerofoil structure 20 that also extend in an essentially straight or linear fashion. With reference to Fig. 1, for example, joints or seams formed between the leading edge cover panels 21a-21e and the respective central box part 22 of the tail structure 20, or between the fairings 25 and the central box part 22 or end box elements 26 will typically be straight or linear.

The footing members 8 in this particular embodiment comprise circular base elements 9 formed as suction pads or cups from a resilient elastomer or rubber material. In this way, the base elements 9 of the footings 8 not only ensure that an outer surface of aluminium and/or CFRC panels of the tail structure 20 is not scratched or otherwise damaged by the casing 2, but they also serve to quickly and simply form a firm, non-slip attachment to that outer surface. The footing members 8 are provided at a height or elevation such that when the suction pads 9 are pressed into attachment with the structure 20, a lower edge region 10 of the lateral sides 6 of the channel member 3 is in close proximity to the outer surface of the structure 20. Indeed, the channel member 3 is preferably configured to substantially seal against the outer surface of the structure 20 along the lateral sides 6. In this regard, the edge region 10 of each side 6 of the channel member 3 may include a flexible or resilient sealing member, e.g. in the form of a rubber strip, along its respective length to prevent substantial airflow leakage laterally from the space or cavity 4 of the casing 2. Such a seal member can also prevent damage, e.g. scratching, to the structure 20.

The channel member 3 of the casing 2 is open at each of its opposite ends to provide an airflow inlet 11 at one end region thereof and an airflow outlet 12 at an opposite end region thereof. In this way, the casing 2 is configured to conduct or direct an airflow through the rectangular space or cavity 4 enclosed or formed by the casing when the U-shaped channel member 3 is placed in its inverted configuration on the outer surface of the airfoil structure 20 such that it accommodates the seam or joint of sealant material along its length.

Referring still to Fig. 2 of the drawings, the system 1 also includes a device 13 for conditioning air in the space or cavity 4 enclosed or formed by the channel member 3 that accommodates the sealant material provided along the seam or joint in the aerofoil structure 20. In this particular embodiment, the conditioning device 13 includes a heater 14 in the form of an electrical heating element incorporated in the casing 2 and extending along an inner surface of the top side 5 of channel member 3, such that the heating element 14 covers substantially the entire extent of the space or cavity for accommodating the sealant material. The heater 14 is thus configured to generate a substantially uniformly distributed heat within the space or cavity 4 to promote the hardening or curing of the sealant material.

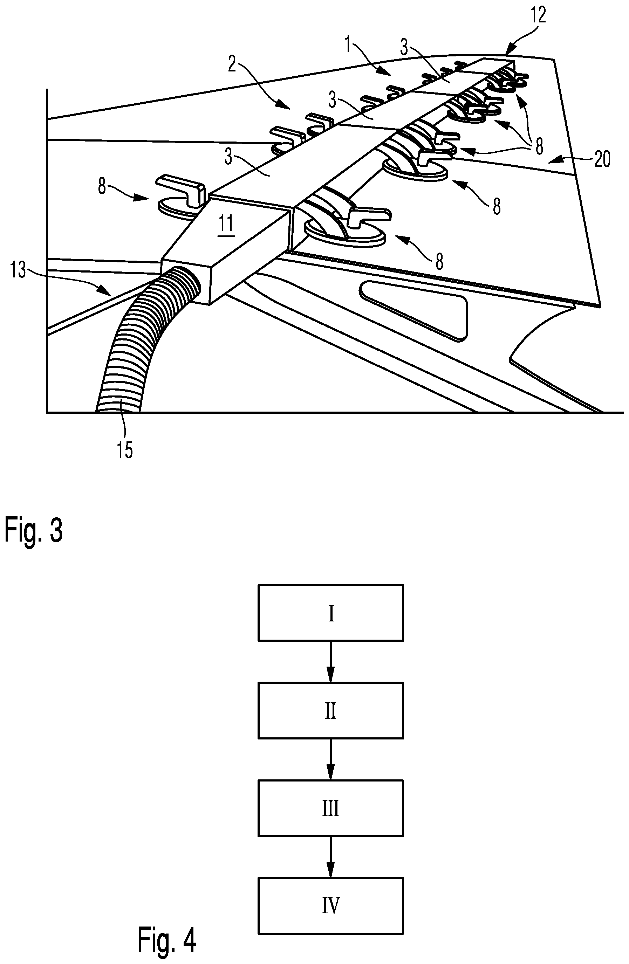

Turning now to Fig. 3 of the drawings, a second embodiment is shown which incorporates the features of the first embodiment and which is arranged in use for curing or hardening sealant material along a joint or seam in an aerofoil structure 20. In this second embodiment, the casing 2 comprises a plurality of the channel members 3 shown in Fig. 2 arranged in series and connected with one another in the longitudinal direction. An airflow inlet 11 at one end of the casing 2 is connected in fluid communication via ducting 15 to a blower device (not shown) for introducing a forced airflow through the inlet 11 into and through the space or cavity 4 enclosed or formed by the series of channel members 3 accommodating the sealant material along the joint or seam in the airfoil structure 20. Again, the conditioning device 13 incorporates a heater 14 having at least one elongate heating element extending over an inner surface at the top side 5 of the channel member 3. Furthermore, the conditioning device 13 of this embodiment includes the blower (not shown) and is configured to generate a conditioned airflow having a predetermined temperature and a predetermined humidity for introduction via the ducting 15 into and through the space or cavity 4 of the casing 2. The conditioning device 13 in this embodiment therefore includes a humidifier (not shown) associated with the blower for regulating the humidity of the air introduced into the space or cavity 4 of the casing 2 via the ducting 15, as well as a separate heater for heating the airflow prior to introduction into the casing 2. In this way, not only can the temperature and humidity of the airflow introduced into the casing 2 be optimized for curing the sealant material, but the heater 14 incorporated in the casing 2 itself can ensure that the desired temperature of the airflow passing through the cavity 4 is maintained over the entire length of the casing 2.

To this end, the system 1 of the present invention preferably includes one or more temperature sensor (not shown) arranged along the length of the casing 2 to detect and monitor the temperature of the airflow passing through space or cavity 4. Furthermore, the system may also include one or more humidity sensor (not shown) provided along the length of the casing 2 for detecting and monitoring the humidity of the airflow in and through the space or cavity 4. In addition, an airflow speed sensor may be provided in the casing to monitor output of the blower. Typically, the system 1 will also include a controller (not shown) in the form of a computer processor for sampling the values or readings detected by the various sensors and comparing these with predetermined or preselected values for temperature, humidity and/or airflow speed through the space or cavity 4 in the casing 2, and for adjusting the conditioning device 13 accordingly to ensure that airflow temperature, airflow humidity and airflow speed remain at or within predetermined or preselected values or ranges.

The ducting 15 which communicates with the casing 2 may be provided with a container for collecting condensation from the humidified airflow. Excessive condensation, however, is generally avoided by coordinating the start-up humidity and the start-up temperature in the conditioning device 13. That is, the controller software can precisely define and regulate the start-up phase of the blower and heater with the start-up phrase of the humidifier to avoid excessive condensation in the ducting 15. Nevertheless, a condensation container may be provided to collect what small amount of water may form as condensation.

Under normal ambient conditions, the curing or hardening time to Shore A hardness ≥ 30 is typically reached after 8 hours. According to the standards, the curing or hardening time is halved for each temperature increase of 5-10°C. Accordingly, with the system 1 of the invention generating a warm airflow at 47 ± 3°C, a reduction of 5 hours in the complete process time is achievable. The remaining 3 hours comprise 0.5 hours for application of the sealant material, 0.5 hours for system installation, 0.25 hours for start-up time, 1.5 hours for forced curing at 47°C (± 3°C) and 0.25 hours for system de-installation.

With reference now to Fig. 4 of the drawings, the method of curing a sealant according to the invention is illustrated schematically, with the numbered boxes I to IV of the diagram representing steps of the method. The first box I represents the step of providing a casing 2 which substantially encloses or forms a space or cavity 4 for accommodating the sealant to be cured, e.g. as is illustrated in Fig. 2. The second box II represents the step of arranging the casing 2 to accommodate the sealant to be cured within the space or cavity 4. That is, the casing 2 is mounted on the aerofoil structure 20 to extend along the seam or joint and is fixed in position via the suction pads 9 of footings 8 such that the sealant seam or joint is substantially enclosed by the casing 2. The third box III of the diagram represents the step of generating an airflow via the blower (not shown) and directing that airflow via the inlet 11 and outlet 12 through said space or cavity 4 in the casing 2 such that the sealant is in contact with the airflow. The fourth box IV then represents the step of conditioning the airflow by heating and/or humidifying the air directed through the space or cavity 4 that accommodates the sealant.

When the temperature detected by the temperature sensor(s) in the casing 2 is below a predetermined temperature value or range, the heating output of either the blower unit and/or the heating elements 14 within the casing 2 may be increased until the detected value matches the predetermined value or range. Similarly, if the detected value is found to be above the preselected temperature, the heating output of the blower unit and/or the heating elements 14 in the casing 2 is reduced until the predetermined or preselected value or range is reached. The heating elements 14 within the casing, which are also controlled by a temperature sensor, are primarily designed to maintain the temperature of the airflow constant along the length of the casing 2, i.e. along the length of the space or cavity 4 within the channel members 3.

If the humidity detected by the humidity sensor(s) is below a predetermined or preselected humidity value or range, the amount of energy input into the humidifier is elevated until that preselected value or range is attained. Similarly, if the detected or measured value is above the preselected value or range, the amount of energy input into the humidifier is reduced until the predetermined or preselected value or ranged is correspondingly attained. Thus, an increase in the humidity level is an active process, whereas the reduction in the humidity level is a passive process.

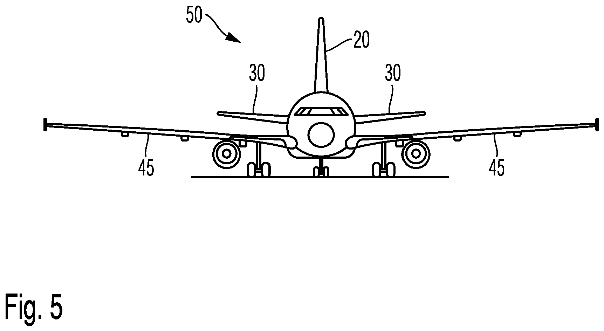

Finally, an aircraft 50 is shown schematically in Fig. 5 that incorporates the vertical tail aerofoil structure 20 produced with the system 1 and method of the invention as described in detail above with reference to Figs. 1 to 4. The aircraft 50 also includes other aerofoil structures, such as horizontal stabilizers 30 and wings 40, as well as a fuselage structure 45, all of which may also include seams or joints, as well as component assemblies, filled with sealant material cured with the system 1 and/or method of the present invention.

Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### List of Reference Signs

- 1: system
- 2: casing
- 3: channel member
- 4: space or cavity
- 5: top side of channel
- 6: lateral side of channel
- 7: underside of channel
- 8: footing
- 9: base element or suction pad
- 10: lower edge of lateral side
- 11: airflow inlet
- 12: airflow outlet
- 13: conditioning device
- 14: heater or heating element
- 15: ducting
- 20: tail aerofoil structure
- 21: leading edge cover panel
- 22: central box part
- 23: rib element
- 24: bolting flange
- 25: fairing panel
- 26: end box element
- 27: lateral rudder
- X: rudder pivot axis

## Claims

1. Curing system (1) for curing a sealant, especially in an aerofoil structure or a fuselage structure of an aircraft or spacecraft, comprising:
a casing (2) which substantially encloses or forms a space or cavity (4) for accommodating the sealant to be cured; and
a device (13) for conditioning an airflow for the space or cavity (4) that accommodates the sealant;
wherein the casing (2) comprises an airflow inlet (11) at one end region of the casing (2) and an airflow outlet (12) at another end region of the casing (2) for an airflow through said space or cavity (4), wherein the casing (2) is elongate and in the form of a channel and is configured to direct the airflow through said space or cavity (4) from the airflow inlet (11) to the airflow outlet (12); and
wherein the conditioning device (13) comprises a heater and/or a humidifier (14) for heating and/or humidifying the airflow in the space or cavity (4) that accommodates the sealant.

2. System (1) according to claim 1, wherein the heater (14) is incorporated in the casing (2) and comprises at least one heating element, such as an electrical heating element, arranged in or adjacent to the space or cavity (4) that is configured to heat the airflow in the space or cavity (4).

3. System (1) according to any one of claims 1 or 2, wherein the casing (2) is adapted to a shape of an aerofoil or fuselage structure and/or to a specific part or area thereof at which the sealant is to be cured.

4. System (1) according to any one of claims 1 to 3, further comprising a blower for generating an air-flow through said space or cavity (4) of the casing (2), the blower being connectable for communication with the airflow inlet (11) of the casing (2).

5. System (1) according to claim 4, wherein the blower is a part of the conditioning device (13), which is configured to generate a conditioned airflow for said space or cavity (4), especially an airflow having a predetermined temperature and/or a predetermined humidity.

6. System (1) according to any one of claims 1 to 5, further comprising a controller which is configured to control or regulate operation of the conditioning device (13), and especially of the heater (14), in dependence upon the airflow through said space or cavity (4).

7. System (1) according to claim 6, wherein the controller is configured to control or regulate operation of the conditioning device in dependence upon the temperature and/or humidity of the airflow as measured in said space or cavity, the system comprising at least one sensor in the casing for detecting temperature and/or humidity of the airflow.

8. Method of curing a sealant, especially in an aerofoil structure or a fuselage structure of an aircraft or spacecraft, comprising the steps of:
accommodating a sealant to be cured within a space or cavity (4) substantially enclosed or formed by a casing (2), said casing (2) being elongate and in the form of a channel;
generating an airflow and directing that airflow through said space or cavity (4) from an airflow inlet (11) at one end region of the casing (2) to an airflow outlet (12) at another end region of the casing; and
conditioning the airflow directed through the space or cavity (2) that accommodates the sealant;
wherein the step of conditioning the airflow comprises one or more of: heating the airflow to a predetermined temperature, and humidifying the airflow to a predetermined humidity.

9. Method according to claim 8, wherein the casing (2) is adapted to a shape of an aerofoil structure or fuselage structure and/or to a specific part or area thereof at which the sealant is to be cured, and wherein the step of accommodating the sealant in the casing (2) comprises arranging the casing (2) on the aerofoil structure or the fuselage structure to substantially cover or enclose the sealant.

10. Method according to any one of claims 8 or 9, wherein the step of conditioning the airflow takes place before the airflow enters the said space or cavity (4) and/or while the airflow is within the space or cavity (4) of the casing (2).

11. Method according to any one of claims 8 to 10, further comprising the step of detecting the temperature and/or humidity of the airflow in the casing and adjusting the conditioning of the airflow when the temperature and/or humidity detected lie(s) outside a predetermined or pre-selected range or value.

## Patentansprüche

1. Härtungssystem (1) zum Härten eines Dichtmittels, speziell in einer Tragflächenstruktur oder Rumpfstruktur eines Luftfahrzeugs oder Raumfahrzeugs, welches umfasst:
ein Gehäuse (2), welches im Wesentlichen einen Raum oder Hohlraum (4) zum Aufnehmen des zu härtenden Dichtmittels umschließt oder bildet; und
eine Vorrichtung (13) zum Konditionieren eines Luftstroms für den Raum oder Hohlraum (4), welcher das Dichtmittel aufnimmt;
wobei das Gehäuse (2) einen Luftstromeinlass (11) an einem Endbereich des Gehäuses (2) und einen Luftstromauslass (12) an einem anderen Endbereich des Gehäuses (2) für einen Luftstrom durch den Raum oder Hohlraum (4) hindurch umfasst, wobei das Gehäuse (2) lang gestreckt ist und die Form eines Kanals hat und dafür ausgelegt ist, den Luftstrom durch den Raum oder Hohlraum (4) hindurch vom Luftstromeinlass (11) zum Luftstromauslass (12) zu leiten; und
wobei die Konditionierungsvorrichtung (13) einen Erhitzer und/oder einen Befeuchter (14) zum Erhitzen und/oder Befeuchten des Luftstroms in dem Raum oder Hohlraum (4), welcher das Dichtmittel aufnimmt, umfasst.

2. System (1) nach Anspruch 1, wobei der Erhitzer (14) in das Gehäuse (2) integriert ist und wenigstens ein Heizelement, wie etwa ein elektrisches Heizelement, umfasst, das in dem Raum oder Hohlraum (4) oder diesem benachbart angeordnet ist und dafür ausgelegt ist, den Luftstrom in dem Raum oder Hohlraum (4) zu erwärmen.

3. System (1) nach einem der Ansprüche 1 oder 2, wobei das Gehäuse (2) an eine Form einer Tragflächen- oder Rumpfstruktur und/oder an einen speziellen Teil oder Bereich davon, an welchem das Dichtmittel gehärtet werden soll, angepasst ist.

4. System (1) nach einem der Ansprüche 1 bis 3, welches ferner ein Gebläse zum Erzeugen eines Luftstroms durch den Raum oder Hohlraum (4) des Gehäuses (2) hindurch umfasst, wobei das Gebläse zur Kommunikation mit dem Luftstromeinlass (11) des Gehäuses (2) verbindbar ist.

5. System (1) nach Anspruch 4, wobei das Gebläse ein Teil der Konditionierungsvorrichtung (13) ist, welche dafür ausgelegt ist, einen konditionierten Luftstrom für den Raum oder Hohlraum (4) zu erzeugen, insbesondere einen Luftstrom, der eine vorbestimmte Temperatur und/oder eine vorbestimmte Feuchtigkeit aufweist.

6. System (1) nach einem der Ansprüche 1 bis 5, welches ferner eine Steuereinheit umfasst, welche dafür ausgelegt ist, den Betrieb der Konditionierungsvorrichtung (13) und speziell des Erhitzers (14) in Abhängigkeit von dem Luftstrom durch den Raum oder Hohlraum (4) zu steuern oder zu regeln.

7. System (1) nach Anspruch 6, wobei die Steuereinheit dafür ausgelegt ist, den Betrieb der Konditionierungsvorrichtung in Abhängigkeit von der Temperatur und/oder Feuchtigkeit des Luftstroms, die in dem Raum oder Hohlraum gemessen wird, zu steuern oder zu regeln, wobei das System wenigstens einen Sensor in dem Gehäuse zum Erfassen von Temperatur und/oder Feuchtigkeit des Luftstroms umfasst.

8. Verfahren zum Härten eines Dichtmittels, speziell in einer Tragflächenstruktur oder Rumpfstruktur eines Luftfahrzeugs oder Raumfahrzeugs, welches die Schritte umfasst:
Aufnehmen eines zu härtenden Dichtmittels innerhalb eines Raumes oder Hohlraumes (4), der im Wesentlichen von einem Gehäuse (2) umschlossen oder gebildet wird, wobei das Gehäuse (2) lang gestreckt ist und die Form eines Kanals hat;
Erzeugen eines Luftstroms und Leiten dieses Luftstroms durch den Raum oder Hohlraum (4) hindurch von einem Luftstromeinlass (11) an einem Endbereich des Gehäuses (2) zu einem Luftstromauslass (12) an einem anderen Endbereich des Gehäuses; und
Konditionieren des Luftstroms, der durch den Raum oder Hohlraum (2) hindurch geleitet wird, welcher das Dichtmittel aufnimmt;
wobei der Schritt des Konditionierens des Luftstroms eines oder mehreres von Folgendem umfasst: Erwärmen des Luftstroms auf eine vorbestimmte Temperatur, und Befeuchten des Luftstroms bis zu einer vorbestimmten Feuchtigkeit.

9. Verfahren nach Anspruch 8, wobei das Gehäuse (2) an eine Form einer Tragflächenstruktur oder Rumpfstruktur und/oder an einen speziellen Teil oder Bereich davon, an welchem das Dichtmittel gehärtet werden soll, angepasst ist, und wobei der Schritt des Aufnehmens des Dichtmittels in dem Gehäuse (2) das Anordnen des Gehäuses (2) auf der Tragflächenstruktur oder der Rumpfstruktur umfasst, um das Dichtmittel im Wesentlichen zu bedecken oder zu umschließen.

10. Verfahren nach einem der Ansprüche 8 oder 9, wobei der Schritt des Konditionierens des Luftstroms stattfindet, bevor der Luftstrom in den Raum oder Hohlraum (4) eintritt und/oder während sich der Luftstrom innerhalb des Raumes oder Hohlraumes (4) des Gehäuses (2) befindet.

11. Verfahren nach einem der Ansprüche 8 bis 10, welches ferner den Schritt des Erfassens der Temperatur und/oder Feuchtigkeit des Luftstroms im Gehäuse und des Einstellens der Konditionierung des Luftstroms, wenn die erfasste Temperatur und/oder Feuchtigkeit außerhalb eines vorbestimmten oder vorgewählten Bereichs oder Wertes liegen (liegt), umfasst.

## Revendications

1. Système de durcissement (1) pour durcir un matériau d'étanchéité, en particulier dans une structure de surface portante ou une structure de fuselage d'un aéronef ou d'un engin spatial, comprenant :
une enveloppe (2) qui entoure ou forme sensiblement un espace ou une cavité (4) pour loger le matériau d'étanchéité à durcir ; et
un dispositif (13) pour conditionner un flux d'air pour l'espace ou la cavité (4) qui loge le matériau d'étanchéité ;
l'enveloppe (2) comprenant une entrée de flux d'air (11) au niveau d'une région d'extrémité de l'enveloppe (2) et une sortie de flux d'air (12) au niveau d'une autre région d'extrémité de l'enveloppe (2) pour un flux d'air à travers ledit espace ou ladite cavité (4), l'enveloppe (2) étant allongée et sous forme d'un canal et étant configurée pour diriger le flux d'air à travers ledit espace ou ladite cavité (4) depuis l'entrée de flux d'air (11) vers la sortie de flux d'air (12) ; et
le dispositif de conditionnement (13) comprenant un dispositif de chauffage et/ou un humidificateur (14) pour chauffer et/ou humidifier le flux d'air dans l'espace ou la cavité (4) qui loge le matériau d'étanchéité.

2. Système (1) selon la revendication 1, le dispositif de chauffage (14) étant incorporé dans l'enveloppe (2) et comprenant au moins un élément chauffant, tel qu'un élément chauffant électrique, agencé dans ou adjacent à l'espace ou la cavité (4), qui est configuré pour chauffer le flux d'air dans l'espace ou la cavité (4).

3. Système (1) selon l'une quelconque des revendications 1 ou 2, l'enveloppe (2) étant adaptée à une forme d'une structure de surface portante ou de fuselage et/ou à une partie ou zone spécifique de celle-ci au niveau de laquelle le matériau d'étanchéité doit être durci.

4. Système (1) selon l'une quelconque des revendications 1 à 3, comprenant en outre un ventilateur pour générer un flux d'air à travers ledit espace ou ladite cavité (4) de l'enveloppe (2), le ventilateur pouvant être connecté pour communiquer avec l'entrée de flux d'air (11) de l'enveloppe (2).

5. Système (1) selon la revendication 4, le ventilateur étant une partie du dispositif de conditionnement (13), qui est configuré pour générer un flux d'air conditionné pour ledit espace ou ladite cavité (4), en particulier un flux d'air ayant une température prédéterminée et/ou une humidité prédéterminée.

6. Système (1) selon l'une quelconque des revendications 1 à 5, comprenant en outre un dispositif de commande qui est configuré pour commander ou réguler le fonctionnement du dispositif de conditionnement (13), et en particulier du dispositif de chauffage (14), en fonction du débit d'air à travers ledit espace ou ladite cavité (4).

7. Système (1) selon la revendication 6, le dispositif de commande étant configuré pour commander ou réguler le fonctionnement du dispositif de conditionnement en fonction de la température et/ou de l'humidité du flux d'air tel que mesuré dans ledit espace ou ladite cavité, le système comprenant au moins un capteur dans l'enveloppe pour détecter la température et/ou l'humidité du flux d'air.

8. Procédé de durcissement d'un matériau d'étanchéité, en particulier dans une structure de surface portante ou une structure de fuselage d'un aéronef ou d'un engin spatial, comprenant les étapes de :
logement d'un matériau d'étanchéité à durcir à l'intérieur d'un espace ou d'une cavité (4) sensiblement fermé ou formé par une enveloppe (2), ladite enveloppe (2) étant allongée et sous la forme d'un canal ;
génération d'un flux d'air et orientation de ce flux d'air à travers ledit espace ou ladite cavité (4) depuis une entrée de flux d'air (11) au niveau d'une région d'extrémité de l'enveloppe (2) vers une sortie de flux d'air (12) au niveau d'une autre région d'extrémité de l'enveloppe ; et
conditionnement du flux d'air dirigé à travers l'espace ou la cavité (2) qui loge le matériau d'étanchéité ;
l'étape de conditionnement du flux d'air comprenant une ou plusieurs des étapes de : chauffage du flux d'air à une température prédéterminée, et humidification du flux d'air à une humidité prédéterminée.

9. Procédé selon la revendication 8, l'enveloppe (2) étant adaptée à une forme d'une structure de surface portante ou d'une structure de fuselage et/ou à une partie ou zone spécifique de celle-ci au niveau de laquelle le matériau d'étanchéité doit être durci, et l'étape de logement du matériau d'étanchéité dans l'enveloppe (2) comprenant l'agencement de l'enveloppe (2) sur la structure de surface portante ou la structure de fuselage pour couvrir ou envelopper sensiblement le matériau d'étanchéité.

10. Procédé selon l'une quelconque des revendications 8 ou 9, l'étape de conditionnement du flux d'air ayant lieu avant que le flux d'air n'entre dans ledit espace ou ladite cavité (4) et/ou pendant que le flux d'air est à l'intérieur de l'espace ou la cavité (4) de l'enveloppe (2).

11. Procédé selon l'une quelconque des revendications 8 à 10, comprenant en outre l'étape de détection de la température et/ou de l'humidité du flux d'air dans l'enveloppe et d'ajustement du conditionnement du flux d'air lorsque la température et/ou l'humidité détectée se situe en dehors d'une plage de valeur prédéterminée ou présélectionnée.
